# EUROPÄISCHE PATENTSCHRIFT

(11) **EP 0 771 991 B1**
(45) Veröffentlichungstag und Bekanntmachung des Hinweises auf die Patenterteilung: **18.07.2001**
(21) Anmeldenummer: 96250251.4
(22) Anmeldetag: 01.11.1996
(51) Int. Cl.: F16L 43/00, B65G 53/52, F15D 1/04

(54) **Gekrümmtes Verbindungsstück und Verfahren zu dessen Herstellung**
Elbow connection element and method of manufacture
Elément de connexion coudé et méthode de fabrication

(30) Priorität: 02.11.1995 DE 19542175
(43) Veröffentlichungstag der Anmeldung: 07.05.1997
(73) Patentinhaber: Küppers, Udo, Dr.-Ing., 28213 Bremen (DE)
(72) Erfinder: Küppers, Udo, Dr.-Ing., 28213 Bremen (DE)
(74) Vertreter: Eisenführ, Speiser & Partner

(56) Entgegenhaltungen:
- FR-A- 2 511 752
- FR-A- 2 525 730
- GB-A- 486 991

## Beschreibung

Die Erfindung betrifft ein Verbindungsstück der im Oberbegriff des Anspruchs 1 angegebenen Art, ein Verfahren zu dessen Herstellung sowie eine Vorrichtung zur Durchführung des Verfahrens.

Derartige Verbindungsstücke - vielfach als "Rohrkrümmer" oder auch nur als "Krümmer" bezeichnet - finden in großer Zahl Anwendung in Fluidleitungssystemen aller Art, etwa in Wasser- und Abwasser-, Gas- und Ölleitungssystemen, in Leitungssystemen der Gebäudeheizung und der Klimatechnik, in Kraftwerken und chemischen Anlagen, in Rohrsystemen für den Schüttguttransport, in Kühl- und Waschgeräten u.v.m.. Auf den Transport der Fluide in den entsprechenden Leitungsystemen entfällt ein nicht unerheblicher Anteil des gesamten Primärenergieverbrauchs.

In der Praxis sind diese Verbindungsstücke mit konstanter Krümmung - insbesondere in Form von Viertelkreisen zur Verbindung zweier unter einem rechten Winkel aufeinanderstoßender Rohrabschnitte - ausgeführt. Diese einfachste Ausführung hat die Vorteile einer hochgradigen Standardisierbarkeit für verschiedenste Anwendungen und einer einfachen Herstellung mit seit langem eingesetzten Technologien und Anlagen und ist daher für viele der o.g. Anwendungen als optimal anzusehen.

Für eine beträchtliche Zahl von Anwendungen haben die herkömmlichen kreissegmentförmigen Krümmer mit konstantem Querschnitt jedoch Nachteile, die in der Vergangenheit immer wieder zu Verbesserungsvorschlägen Anlaß gegeben haben. Diese betrafen insbesondere Verbindungsstücke für Rohrleitungssysteme, in denen zusammen mit einem Fluid Feststoffe - speziell solche, die abrasiv auf die Rohrwandung einwirken - transportiert werden.

So ist aus der deutschen Offenlegungsschrift DE-OS 1 750 542 ein Stoßkrümmer für pneumatische Transportleitungen bekannt, der an der Peripherie der Krümmung zwischen der ein- und der auslaufenden Rohrleitung eine Prallwand aufweist, die die im Fluidstrom auftreffenden Feststoffe reibungsarm umlenken soll.

Aus der deutschen Offenlegungsschrift DE-OS 2 004 578 ist eine Fluid-Rohrleitung aus Elementen mit kreisförmigem Querschnitt und einem ersten Durchmesser und Übergangsstükken und einem Rohrbogen mit wesentlich größerem Durchmesser bekannt, wobei an der konkaven Seite des Rohrbogens eine zusätzliche Zwischenwand gebildet ist.

Auch in der deutschen Patentschrift DE 21 40 419 C3 wird ein Rohrkrümmer beschrieben, der mit zusätzlichen Leiteinrichtungen im Inneren versehen ist. Diese sind hier sehr speziell so ausgebildet, daß von der Krümmerwandung zur Mittenachse hin verlaufende, sich gegensinnig drehende Wirbel ausgebildet werden.

Die deutsche Patentanmeldung DE 32 30 774 A1 beschreibt ein Bogenstück für Rohrleitungen, insbesondere für die pneumatische Förderung von Pulvern oder Granulaten abrasiver Natur, der einen sich vom anströmseitigen Rohr aus schnell erweiternden und nach Erreichen des Umlenkpunktes zum abströmseitigen Rohr hin langsamer wieder verringernden Querschnitt aufweist, wobei der Rohrbogen insgesamt eine komplizierte Gestalt aufweist.

Eine prinzipiell ähnliche Lösung, bei der das Verbindungsstück aber in praktisch vorteilhafter Weise gleichschenklig und aus geometrisch einfacheren Abschnitten aufgebaut ist, beschreibt die europäische Patentanmeldung EP 0 195 528 A1.

All diese - hier nur beispielhaft genannten - Verbindungsstücken sind aufgrund ihrer komplizierten Gestalt wesentlich aufwendiger in der Herstellung als die herkömmlichen Krümmer. Zudem ist ihre Form nicht aus energetischer Sicht, sondern isoliert mit dem Ziel einer Verminderung der Abrasionswirkung des transportierten feststoffhaltigen Fluids bestimmt worden.

Äußerst vielgestaltige Rohrkrümmer sind aus dem Gebiet der Abgasanlagen für Verbrennungsmotoren bekannt; ein Beispiel hierfür zeigt die deutsche Patentanmeldung DE 42 28 188 A1. Derartige Krümmer sind aber nicht gattungsgemäß, werden nicht als separate Teile, sondern integriert in eine zusammenhängende Abgasanlage gefertigt, und ihre Formgebung ist primär durch ästhetische Gesichtspunkte bestimmt. Insoweit bei der Formgebung dieser Krümmer - speziell für Zweitaktmotoren - energetische Aspekte eine Rolle spielen, so betreffen diese eine druckwellendynamisch vorteilhafte Auslegung des Abgassystems zur Erhöhung des Füllungsgrades des Arbeitszylinders, nicht aber die energetische Optimierung der Fluidströmung im Abgasrohr als solche.

Dem Ziel einer Verringerung des Strömungswiderstandes dient die in der Vergangenheit ebenfalls vielfach vorgeschlagene und auf einigen Anwendungsgebieten auch praktizierte Zugabe spezieller reibungsvermindernder Chemikalien zum Fluid. Dieses Vorgehen ist jedoch nur für spezielle Einsatzfälle praktikabel und zudem auch dort meist zu kostenaufwendig und unter Umweltschutzaspekten problematisch.

Ein Versuch einer energetischen Optimierung der Krümmerform unter Beibehaltung enes konstanten Querschnitts über die Länge des Krümmers und unter Verzicht auf zusätzliche Fluidleitelemente wurde - als Modellversuch im Rahmen einer breiter angelegten wissenschaftlichen Arbeit - von I. Rechenberg in dem Buch: Evolutionsstrategie, Stuttgart 1973, S. 29 bis 34, beschrieben.

Die hierbei als gegenüber dem viertelkreisförmigen Krümmer energetisch vorteilhaft ermittelten Krümmergeometrien sind insofern nicht gattungsgemäß und für die meisten praktischen Anwendungen wenig geeignet, als die Schenkellängen ungleich sind. Dies würde den Einbau entsprechend gefertigter Krümmer in vorhandene Leitungssysteme unmöglich machen und tiefgreifende Umstellungen bei der Planung neuer Systeme erfordern, die als kaum durchsetzbar erscheinen.

Aus der FR-A-2 525 730 sind gekrümmte Rohre mit über den gesamten Verlauf konstantem Krümmungsradius bekannt, die eine Art verkürzter Viertelkreisrohrkrümmer bilden. Die Verkürzung und damit auch eine Materialeinsparung wird durch eine Neigung der Eingangs- und Ausgangsfläche gegenüber der auf der lokalen Rohrachse senkrecht stehenden Querschnittsfläche realisiert. Mit diesen Rohrkrümmern ist auch eine Verringerung des Platzbedarfs erreichbar, jedoch gibt die Druckschrift keinen Hinweis auf eine Optimierung der Strömungsverhältnisse im Rohr, und eine solche scheint mit der vorgeschlagenen Lösung auch nicht erreicbbar zu sein.

Der Erfindung liegt die Aufgabe zugrunde, ein Verbindungsstück der eingangs genannten Gattung mit hinsichtlich mindestens eines relevanten Strömungsparameters, insbesondere des Strömungswiderstandes, optimierter Gestalt, das einfach und kostengünstig herstellbar und in bestehende Rohrleitungssysteme ohne weiteres einfügbar ist, sowie ein Verfahren zu dessen Herstellung und eine Vorrichtung zur Durchführung des Verfahrens anzugeben.

Diese Aufgabe wird in ihrem ersten Teil durch ein Verbindungsstück mit den Merkmalen des Anspruchs 1, in ihrem zweiten Teil durch ein Verfahren gemäß Anspruch 7 und in ihrem dritten Teil durch eine Vorrichtung mit den Merkmalen des Anspruchs 14 gelöst.

Die Erfindung schließt den Gedanken ein, ein (bezüglich des Schnittpunktes der Längsachsen zweier zu zu verbindender Rohre) gleichschenkliges Verbindungsstück mit über seine Länge konstanter Querschnittsgestalt und gegenüber der herkömmlichen Kreissegmentform optimiertem Krümmungsverlauf anzugeben. Ein solches Verbindungsstück ist weitgehend auf herkömmliche Weise in vorhandenen Anlagen herstellbar, enthält keine kostentreibenden Zusatzteile und/oder Aufweitungen und ist in vorhandenen Systemen oder in Planungen ohne Änderung der bestehenden oder auf herkömmliche Weise geplanten Leitungsführung einsetzbar.

In einer Ausführung mit besonders geringem Umlenkwiderstand weist die den Krümmungsverlauf des Verbindungsstücks oder Rohrbogens beschreibende Funktion einen Bereich stetigen Übergangs von einer - durch den annähernd geradlinig vorausgesetzten Verlauf des benachbarten Rohrabschnitts vorgegebenen - Krümmung Null am Ende des anströmseitigen bzw. einlaufenden Rohres bis zum Punkt oder Abschnitt des Krümmungsmaximums und/oder von diesem Punkt oder Abschnitt zum abströmseitigen Rohr hin auf.

Die die Krümmung beschreibende Funktion kann nahe dem dem anströmseitigen und/oder abströmseitigen Rohr oder Kanal benachbarten Ende auch einen Wendepunkt haben.

Die Querschnittsgestalt des Verbindungsstücks wird je nach dem konkretem Einsatzzweck in Anpassung an die Querschnittsgestalt der angrenzenden Rohr- oder Kanalabschnitte gewählt; in den meisten Fällen wird sie kreisförmig, für eine Reihe von Einsatzgebieten (etwa die Lüftungs- und Klimatechnik) auch rechteckig oder speziell quadratisch sein. Auch das Material kann entsprechend dem Einsatzzweck ohne Einschränkung aus der Vielzahl von herkömmlichen Rohr- und Krümmerwerkstoffen gewählt werden.

Ein wesentlicher Gedanke hinsichtlich der praktischen Ausführung der Erfindung besteht darin, unter Verknüpfung mehrerer Verbindungsstücke der oben genannten Art strömungstechnisch optimierte Krümmeranordnungen mit komplizierterer geometrischer Gestalt bereitzustellen. Eine solche Anordnung kann insbesondere in Strömungsrichtung aneinandergefügte Verbindungsstücken mit entgegengesetzten Krümmungsrichtungen ("Links-" und "Rechts-"Krümmer) umfassen und/oder Verbindungsstücke einschließen, die zwischen ihrer anströmseitigen und ihrer abströmseitigen Stirnfläche unterschiedliche Winkel einschließen (vorzugsweise 90°-, 45°-bzw. 30°-Krümmer und/oder Krümmer mit speziellen Paßwinkeln für vorhandene Leitungssysteme). Dabei kann mindestens an einer Stelle zwischen zwei Verbindungsstücken oder ggfs. am Ende eines Verbindungsstücks zum Distanzausgleich ein gerades Rohr- oder Kanalstück eingefügt sein.

Das Verfahren zur Herstellung eines erfindungsgemäßen Verbindungsstücks zeichnet sich dadurch aus, daß - der eigentlichen Formgebung durch Biegen, Gießen, Spritzgießen o.ä. vorgelagert - ein Schritt der Formbestimmung des Verbindungsstücks vorgesehen ist, der einen Optimierungsvorgang unter Erzeugung eines reellen (oder virtuellen, auf einem Rechner simulierten) Fluidstromes mit mindestens einem Strömungs- oder die mechanische Belastung des Krümmers kennzeichnenden Parameter umfaßt. Es liegt auch im Rahmen der Erfindung, einen solchen Formbestimmungsschritt relativ losgelöst von der eigentlichen Fertigung separat vorzunehmen, etwa im Rahmen einer strömungstechnischen Anlagenoptimierung als Dienstleistung, auf deren Grundlage dann ein optimiertes zwei- oder dreidimensionales Rohrsystem zusammenhängend gefertigt wird.

Für eine im Hinblick auf minimale Energieverluste beim Transport des Fluids optimierte Formgebung wird vorzugsweise die Druckdifferenz zwischen Einlaufund Auslauf des Krümmers gemessen, der besagte Parameter ist dann der Fluiddruck. In besonders einfacher Weise kann die Verbindungsstück-Gestalt aber auch auf maximalen Stoffdurchsatz pro Zeiteinheit hin optimiert werden. Aufwendiger, aber für eine Reihe von Anwendungen von besonderer Bedeutung, ist eine Optimierung auf geringste mechanische Belastung des Krümmers hin.

Für spezielle Anwendungen, wo erhöhte Erstellungskosten in Kauf genommen werden können, kann zusätzlich zur optimierten Krümmung eine die Strömungseigenschaften weiter verbessernde, insbesondere strömungslenkende, Strukturierung (vorzugsweise Rillierung) der Innenoberfläche vorgesehen sein. Deren Gestalt kann in vorteilhafter Weise zusammen mit dem Krümmungsverlauf optimiert werden.

Ist ein anderes Optimierungsziel vorgegeben als die Erreichung eines minimalen Druckverlustes (z. B. Maximierung des Fluiddurchsatzes pro Zeiteinheit oder Minimierung der Wandreibung eines Feststoffe tragenden Fluids oder eines aus Feststoffteilchen bestehenden Pseudo-Fluids), ist auch eine entsprechende Meßgröße zu wählen.

Der Formbestimmungsschritt wird in vorteilhafter Weise nach einem (bevorzugt mehrgliedrigen) evolutionären Algorithmus ausgeführt. Beispielsweise wird die Menge der untersuchten Verbindungsstück-Modelle im Verlauf des Optimierungsvorganges - von mindestens einer vorgegebenen Form (etwa dem Viertelkreis) ausgehend - gemäß dem Grundprinzip Mutation-Selektion schrittweise vergrößert, bis eine Form mit hinreichender Annäherung an das Optimierungsziel -vorzugsweise mit hinreichend niedrigem Strömungswiderstand - gefunden ist. Unter "Mutation" ist hier eine zufällige Änderung eines oder mehrerer Geometrieparameter(s) des Krümmers, unter "hinreichender Annäherung" ist in praxi insbesondere auch ein Zustand zu verstehen, von dem aus binnen einer bestimmten Anzahl weiterer Schritte keine deutliche Verbesserung mehr gelingt. Der Selektionsschritt der evolutionären Optimierung wählt - je nach Anwendung der spezifischen, evolutionären Optimierungsstrategie -eine oder mehrere Krümmervariationen mit zugehörigen Geometrieparametern aus, deren gemessene "Qualität(en)" im Vergleich zu den "Qualitäten" weiterer Krümmervariationen derselben Optimierungsgeneration dem gesetzten Ziel am nächsten kommen. Mit diesen ausgewählten Krümmer(-parametern) beginnt ein neuer MutationsSelektions-Zyklus. Auch moderne nichtlineare Optimierungsstrategien können mit Vorteil angewandt werden.

Die Form der Verbindungsstück-Modelle ist auf einfache und zweckmäßige Weise durch die lokalen Krümmungsradien der Verbindungsstück-Mittenachse (d.h. der Abstände zu einem Punkt, von dem aus sich ein Kreisbogen zwischen den Enden des anström- und des abströmseitigen Rohres ziehen läßt) bei vorgegebenen Winkelwerten des Ortes zwischen den dem Verbindungsstück zugewandten Enden des ersten und zweiten Rohres - mit anderen Worten: durch die Polarkoordinaten der Mittenachse bezüglich des genannten Punktes -beschreibbar. Ein Mutationsschritt umfaßt dann die Variation mindestens eines lokalen Krümmungsradius nach dem Zufallsprinzip bzw. die Variation des Krümmungsverlaufs in einem Abschnitt des Verbindungsstück-Modells.

In einer besonders variablen Ausbildung des Verfahrens wird der Krümmungsverlauf in einem Abschnitt durch gleichzeitige Einstellung des lokalen Krümmungsradius an einem Ort in diesem Abschnitt (zweckmäßigerweise in dessen Mitte) und eines den Verlauf der Längsachse in der Umgebung dieses Ortes angebenden Richtungsparameters eingestellt.

In einer vorteilhaften Ausprägung des Verfahrens ist die Zahl der Stützstellen für die Bestimmung des Krümmungsverlaufes (aus einer vorbestimmten Maximalzahl) wählbar, um durch Vorgabe zusätzlicher Stützstellen in Winkelbereichen, die sich im Verlaufe der ersten Optimierungsschritte als besonders kritisch erwiesen haben, den Krümmungsverlauf besonders präzise vorgeben zu können. Die Zahl der Punkte, an denen der lokale Krümmungsradius bzw. Krümmungsverlauf variiert wird, kann sich bei dieser Ausführung des Verfahrens mit zunehmender Zahl der Formbestimmungsschritte mithin lokal verdichten.

In einer Alternative hierzu ist es auch möglich, die Gesamtzahl der Punkte, an denen der Krümmungsverlauf im Zuge des Verfahrens variiert wird, über die Dauer des Verfahrens beizubehalten, jedoch eine Variation der Winkelabstände zwischen diesen Punkten in der Weise zuzulassen, daß diese in den sich als besonders kritisch herauskristallisierenden Winkelbereichen verdichtet, in unkritischeren Winkelbereichen hingegen "ausgedünnt" werden. Selbstverständlich ist auch eine Kombination beider Vorgehensweisen möglich.

Um das genannte Verfahren - speziell die letztgenannte Ausführung - in vorteilhafter Weise realisieren zu können, ist eine spezielle Vorrichtung vorgesehen, die gegenständlich als Versuchaufbau oder auch als Computersimulationsmodell ausgeführt sein kann. Sie umfaßt:
- eine reale oder virtuelle Fluidquelle zur Erzeugung eines (entsprechend realen oder virtuellen) Fluidstromes mit mindestens einem vorbestimmten Strömungsparameter,
- ein (reales oder virtuelles) Verbindungsstück-Modell mit einem mindestens mittelbar mit dem Ausgang der Fluid-Quelle verbundenen Eingang, einem Ausgang und variablem Krümmungsverlauf in Richtung der Längserstreckung zwischen seinem Ein- und Ausgang,
- eine dem Eingang des Verbindungstück-Modells zugeordnete Bestimmungseinrichtung zur Bestimmung (Messung oder Vorgabe und Messung an verschiedenen Stellen oder Berechnung) einer strömungstechnisch oder hinsichtlich der mechanischen Belastung relevanten Größe des Fluidstromes,
- eine eingangsseitig mit dem Ausgang der Bestimmungseinrichtung verbundene Verarbeitungseinheit zur Verarbeitung der bestimmten Werte der besagten Größe,
- eine dem Verbindungsstück-Modell zugeordnete (reale oder virtuelle) Verstelleinrichtung zur Einstellung verschiedener vorbestimmter Verläufe gemäß Anspruch 1, welche aufweist:
   -- eine Mehrzahl von Radial-Verstelleinrichtungen zur Verstellung des lokalen Radius eines Abschnitts des Verbindungsstücks,
   -- eine Mehrzahl von, jeweils einer Radial-Verstelleinrichtung zugeordneten, Tangential-Verstelleinrichtungen zur Verschiebung des Angriffspunktes der jeweils zugeordneten Radial-Verstelleinrichtung am Verbindungsstück-Modell und
   -- eine Mehrzahl von, jeweils einer Tangential-Verstelleinrichtung zugeordneten, Drehwinkel-Verstelleinrichtungen zur Drehung der Angriffsrichtung der jeweils zugeordneten Radial-Verstelleinrichtung.

Wahlweise kann auch eine Steuereinrichtung zur Steuerung der Verstellvorgänge (ggfs. automatisch im Ansprechen auf die Verarbeitungseinheit) und u.U. auch der Auswertung selbst vorgesehen sein. Verstelleinrichtungen können auch an der Fluidquelle vorgesehen sein.

Bei der gegenständlichen Ausführung besteht das Verbindungsstück-Modell insbesondere aus flexiblem Material, und es sind als Radial-Verstelleinrichtungen am Umfang des Verbindungsstück-Modells angreifende, mit einem in Längserstreckung verschieblichen, radial verlaufenden Haltestab versehene (ringförmige) Halterungen, als Tangential-Verstelleinrichtung eine viertelkreisförmig tangential verlaufende Führungsbahn mit feststellbaren Kulissensteinen für die Haltestäbe der Radial-Verstelleinrichtungen und als Drehwinkel-Verstelleinrichtungen Kulissenstein-Halter mit einer Aufnahme zur drehbaren Lagerung des Kulissensteins vorgesehen.

Die Fluidquelle ist in diesem Fall in besonders einfach zu handhabender Ausführung vorzugsweise ein Drucklufterzeuger (bevorzugt mit Regeleinrichtung), der insbesondere ein Lüftergebläse oder einen Kompressor aufweist. Für Applikationen, bei denen ein höherviskoses oder stark feststoffbehaftetes Medium das Fluid darstellt oder wo es etwa um sich fluidartig verhaltende Feststoffströme geht, wird bei der Formbestimmung am Modell in der Regel ein Fluid mit vergleichbaren Eigenschaften verwendet werden müssen, so daß dann etwa eine Hydraulikpumpe einzusetzen ist. Der Fluidquelle kann auch speziell ein Reservoir für Feststoffe oder Mehrstoff-Gemische zur Erzeugung eines Fluidstromes mit Feststoffteilchen einer vorgegebenen Größenverteilung und Konzentration zugeordnet sein.

Als eine erste und/oder zweite Bestimmungseinrichtung kann ein Staudruckrohr zur Messung des Fluiddruckes vorgesehen sein. Es können aber auch andere bekannte Druckmeßeinrichtungen oder gänzlich andersartige Meßinstrumente eingesetzt sein, vorzugsweise für die optimierte Formbestimmung von Verbindungsstücken für den Schüttguttransport eine Fluidmengen-Erfassungs- und eine Zeitmeßeinrichtung zur Ermittlung der das Verbindungsstück-Modell pro Zeiteinheit durchströmenden (Pseudo-)Fluidmenge.

Unter Verzicht auf eine Vergegenständlichung kann die Vorrichtung Mittel zur Computersimulation der Fluidquelle, des Verbindungsstück-Modells und der Verstelleinrichtung sowie zur eingangsseitig des Verbindungsstücks vorgenommenen Bemen mit der Beschreibung der bevorzugten Ausführung der Erfindung anhand der Figuren näher dargestellt. Es zeigen:
Figuren 1a bis 1c Längsschnittdarstellungen von Verbindungsstücken nach Ausführungsformen der Erfindung,
Figuren 2a bis 2c grafische Darstellungen des Druckabfalls in Abhängigkeit vom Fluid-Volumenstrom bei den Ausführungsformen nach Figur 1a bis 1c,
Figuren 3a bis 3c grafische Darstellungen zur bei den Ausführungsformen nach Figur 1a bis 1c erreichten Verbesserung der Strömungseigenschaften gegenüber einem viertelkreisförmigen Verbindungsstück,
Figuren 4a bis 4h schematische Darstellungen von Beispielen für Verbindungsstücke bzw. kombinierte Verbindungsstück-Anordnungen gemäß weiteren Ausführungsformen,
Figur 5 eine schematische Darstellung einer Vorrichtung zur Durchführung der Formbestimmung eines erfindungsgemäßen Verbindungsstücks in der Draufsicht,
Figur 6 eine Querschnitts-Detaildarstellung zur Vorrichtung nach Figur 5,
Figur 7 eine weitere Ausführungsform der Vorrichtung zur Durchführung zur Formbestimmung und
Figur 8 eine weitere Ausführungsform der Vorrichtung zur Durchführung der Formbestimmung.

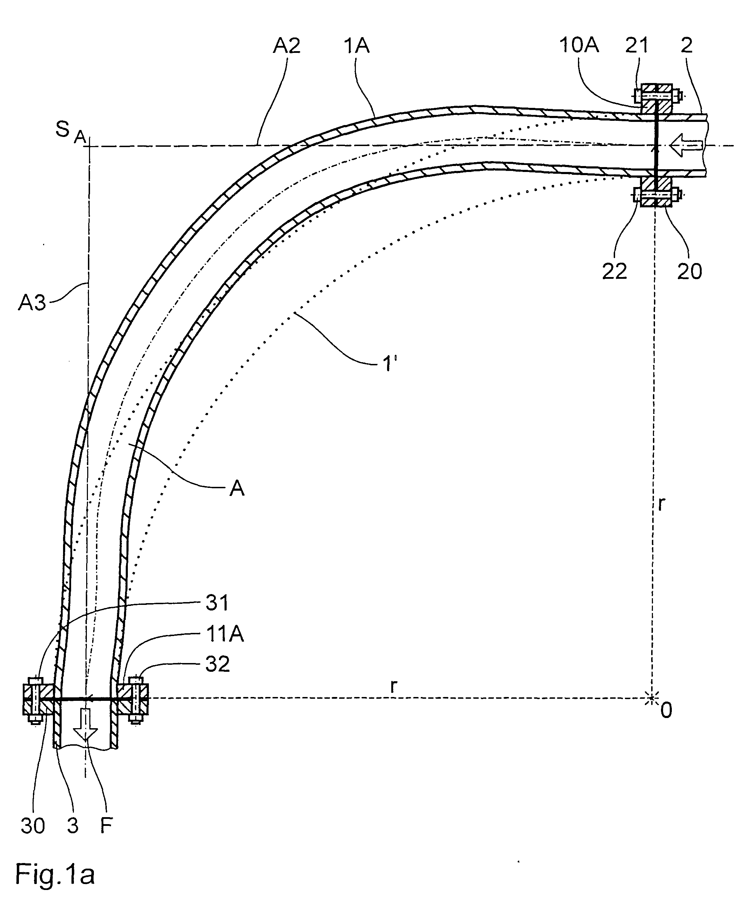

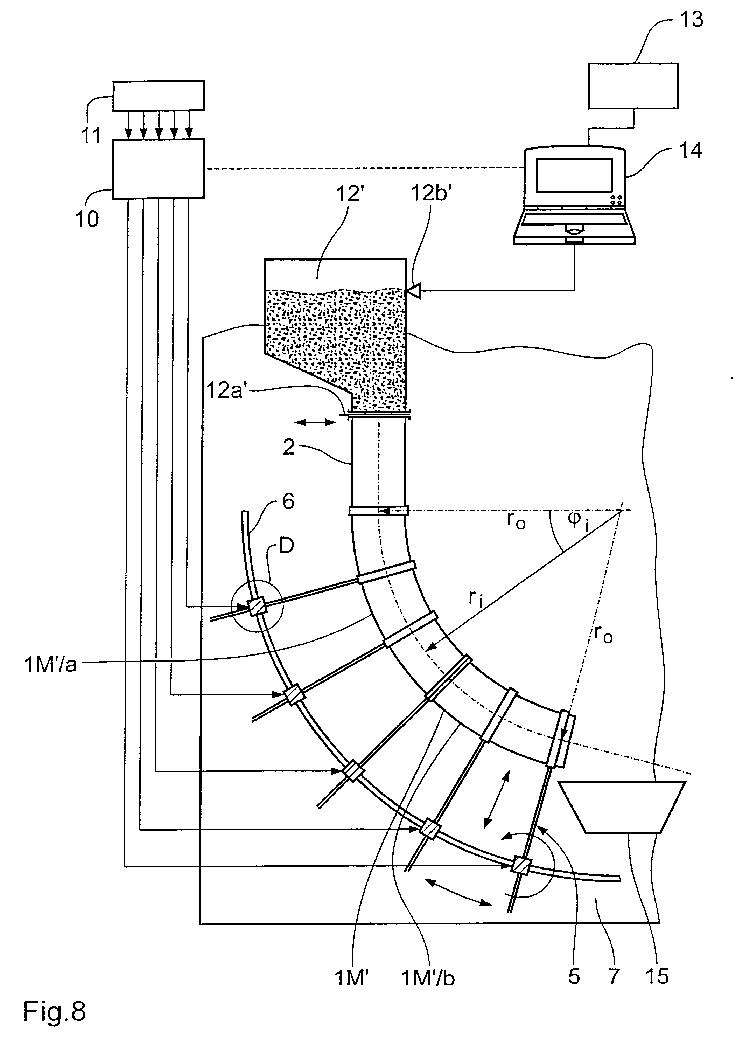

In den Figuren 1a bis 1c ist je ein 90°-Verbindungsstück 1A, 1B und 1C aus Stahlrohr nach einer Ausführungsform in seiner Verbindung mit je einem anströmseitig und abström- Figur 8 eine weitere Ausführungsform der Vorrichtung zur Durchführung der Formbestimmung.

In den Figuren 1a bis 1c ist je ein 90°-Verbindungsstück 1A, 1B und 1C aus Stahlrohr nach einer Ausführungsform in seiner Verbindung mit je einem anströmseitig und abströmseitig angeflanschten geraden Stahlrohrstück 2 und 3 gezeigt.

Die Verbindungsstücke sind aus Stahlrohr-Halbzeug auf einer Biegemaschine mit dem optimierten Krümmungsverlauf entsprechender Anlage auf an sich bekannte Weise gebogen und die Flansche 10A, 11A; 10B, 11B bzw. 10C, 11C des jeweiligen Verbindungsstücks - ebenso wie die Flansche 20 bzw. 30 des geraden Rohres 2 bzw. 3 - nachträglich angeschweißt. Die Verbindung efolgt in der gezeigten Ausführung mittels Bolzen-Mutter-Verschraubungen 21, 22 bzw. 31, 32.

Die Mittenachse A des jeweiligen Verbindungsstücks und die Mittenachsen A2, A3 der geraden Rohrstücken sind als strichpunktierte Linie dargestellt, und zum Vergleich ist (mit punktierten Linien) jeweils der Verlauf der Innenwandung eines viertelkreisförmigen Verbindungsstücks 1' gezeigt. Mit "r" ist der Abstand der Mittenachse A an den Verbindungsstellen der Flansche 10A/20, 10B/20 bzw. 10C/20 und 11A/30, 11B/30 und 11C/30 zum Krümmungsmittelpunkt des viertelkreisförmigen Vergleichs-Krümmers 1' bezeichnet, der an beiden Verbindungsstellen gleich ist. Die Strömungsrichtung ist auf der An- und Abströmseite jeweils mit einem Pfeil bezeichnet. Der Schnittpunkt der Mittenachsen A2. A3 ist mit SA bezeichnet.

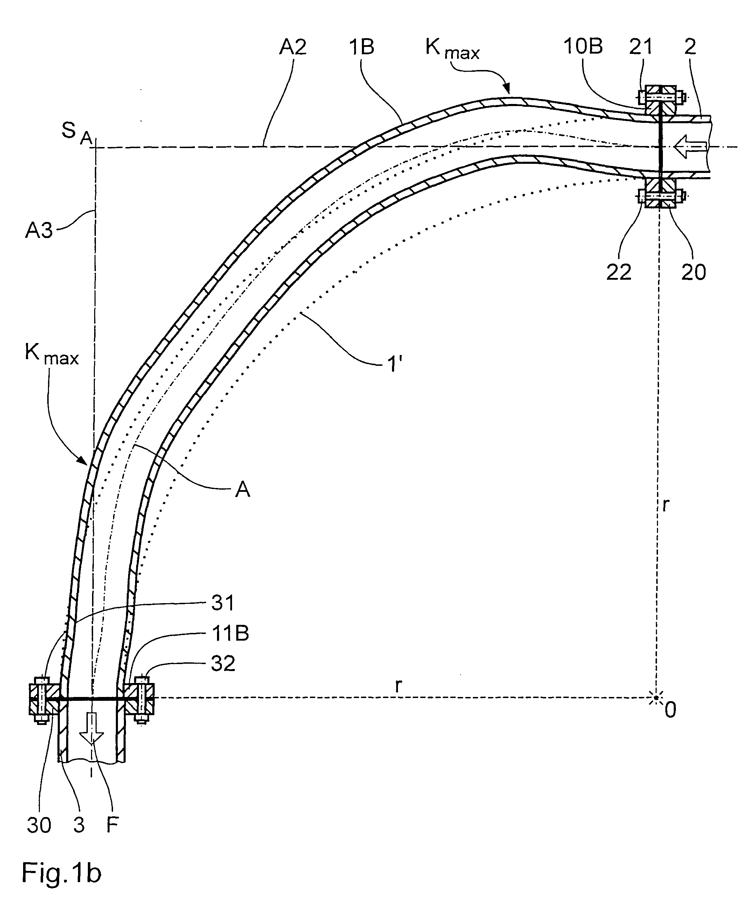

In allen Figuren 1a bis 1c ist zu erkennen, daß die Krümmung über den Längsverlauf des jeweiligen Verbindungsstücks - anders als die des Viertelkreis-Krümmers 1' -nicht konstant ist, sondern mindestens ein Maximum aufweist, dessen Ort zu den Enden der angrenzenden geraden Rohre 2, 3 verschiedene Abstände hat. Bei den Ausführungen nach Figur 1b und lc weist der Krümmungsverlauf sogar mehrere Maxima auf; bei der Ausführung nach Figur la hat der Krümmungsverlauf einen Wendepunkt in der Nachbarschaft des anströmseitigen Rohres 3 und bei der Ausführung nach Figur 1b je einen Wendepunkt in der Nachbarschaft des an- und des abströmseitigen Rohres 2 und 3.

Die obigen Angaben zu Material und Herstellung der Verbindungsstücken 1A bis 1C sind (ebenso wie deren konkrete Form) im Sinne von Beispielen zu verstehen; für entsprechende Anwendungen können sie als gegossene bzw. druckgegossene Krümmer aus Metall (Gußeisen, Aluminium etc.) oder Beton, Spritzguß-Kunststoffteile oder gebogene extrudierte (insbesondere auch flexible) Kunststoffrohre, Glasrohre o.ä. ausgeführt sein.

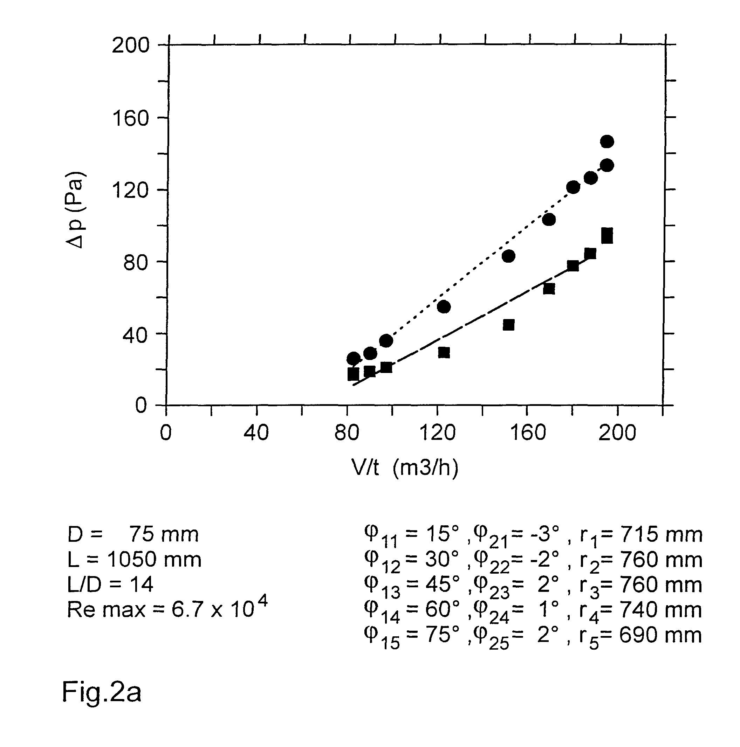

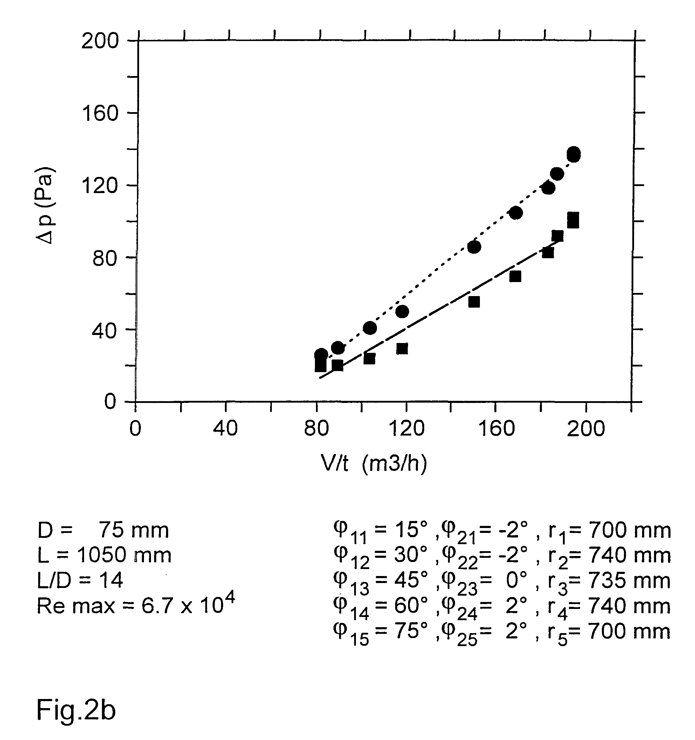

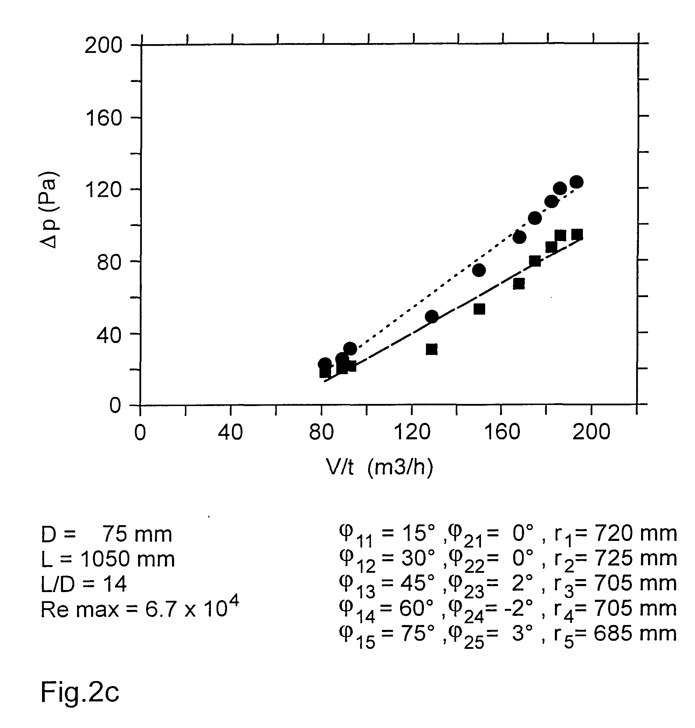

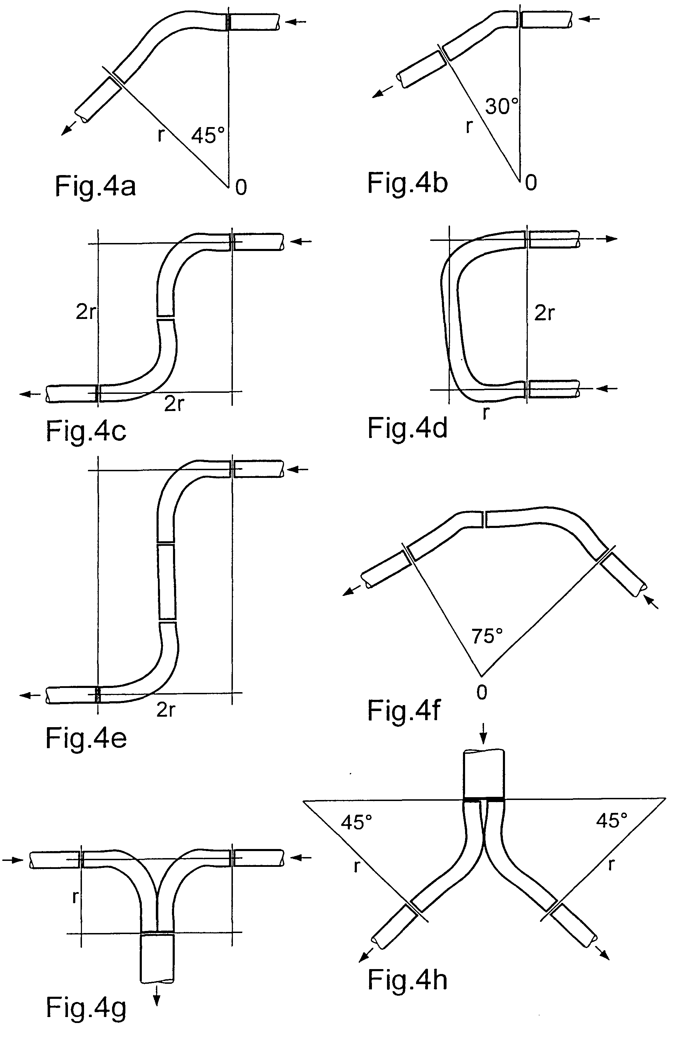

Die Figuren 2a bis 2c sind Darstellungen des Druckabfalls Δp eines Luftstromes zwischen der Anströmseite und der Abströmseite in Abhängigkeit vom Fluid-Volumenstrom V/t bei den Verbindungsstücken 1A bis 1C nach Figur la bis lc (als gefüllte Quadrate dargestellt), jeweils im Vergleich zu Werten für das Verbindungsstück 1' (als gefüllte Kreise dargestellt). Die Meßwerte wurden mittels einer Versuchsanordnung gemäß Figur 4 an einem flexiblen Kunststoffrohr mit dem Durchmesser D = 75 mm und der Länge L = 1050 mm und geradlinigem Ein- und Auslauf von je 1000 mm Länge gewonnen, in das ein mittels eines Radialgebläses erzeugter, stationärer Luftstrom eingeleitet wurde. Die Druckdifferenzwerte wurden an Meßpunkten im geradlinigen Ein-und Auslaufbereich jeweils unter Verwendung eines Staudruckrohres ermittelt. Die Reynolds-Zahl Re wurde in den Versuchen konstantgehalten.

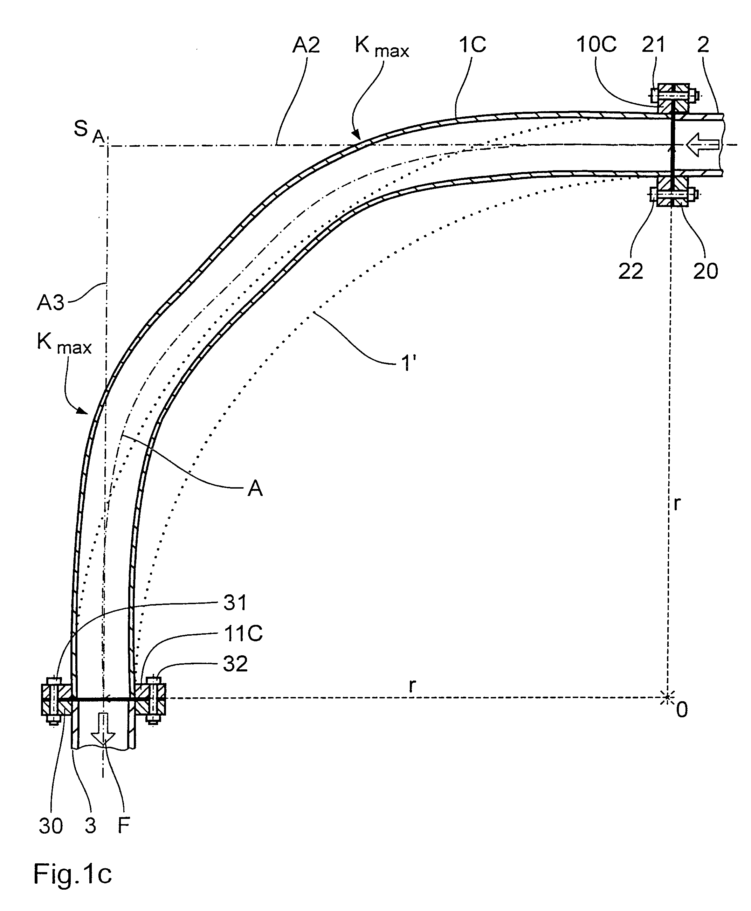

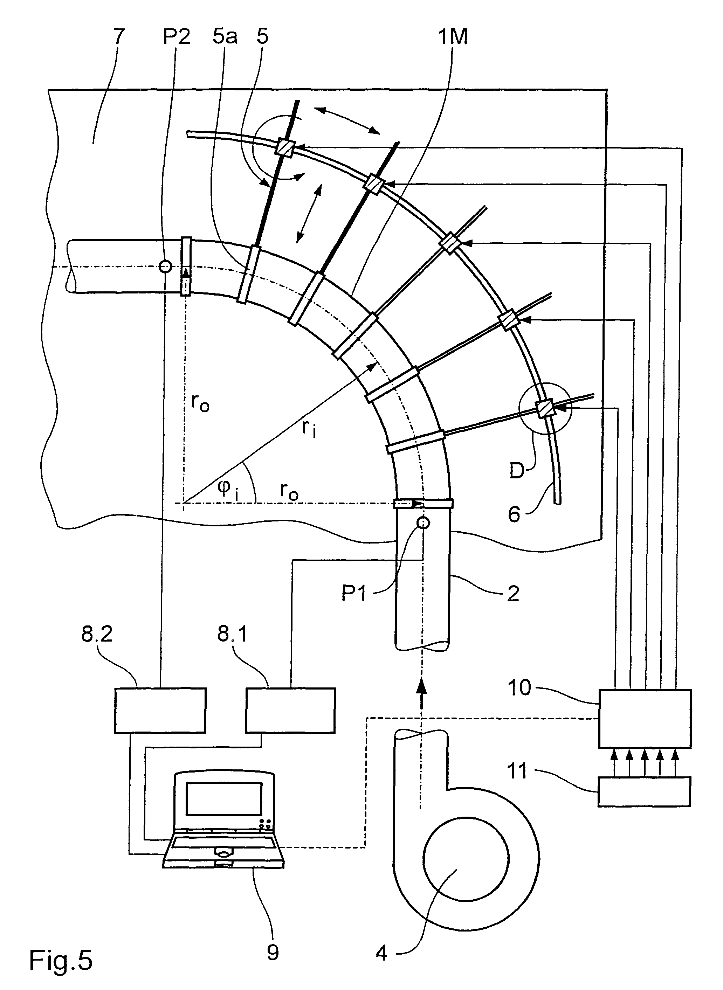

In den Grafiken sind die Abstände r ("Radien") der Mittenachse A zum Punkt 0 (gemäß Figur 1 bis 1c) für verschiedene Winkel ϕ1 zwischen der Position des jeweiligen Rohrhalters (vgl. Figur 5) und der Verbindungslinie zwischen dem Punkt 0 und der anströmseitigen Stirnfläche des jeweiligen Verbindungsstücks (der mithin ein Winkel-Wert von 0° entspricht) sowie Winkel ϕ2 einer Verdrehung der Ebene des Rohrhalters gegenüber seiner Verbindungslinie zum Punkt 0 angegeben. Diese Werte-Tripel kennzeichnen - in grober Näherung - den Krümmungsverlauf des Verbindungsstücks 1A, 1B oder 1C.

Es ist deutlich zu erkennen, daß der Druckabfall bei allen drei Ausführungsformen erheblich geringer ist als beim Vergleichskrümmer. Dies belegt, daß die Ausführungsformen einen geringeren Strömungswiderstand haben, was wiederum geringeren Energieaufwand beim Transport eines vorgegebenen Fluidvolumens durch den Krümmer bedeutet.

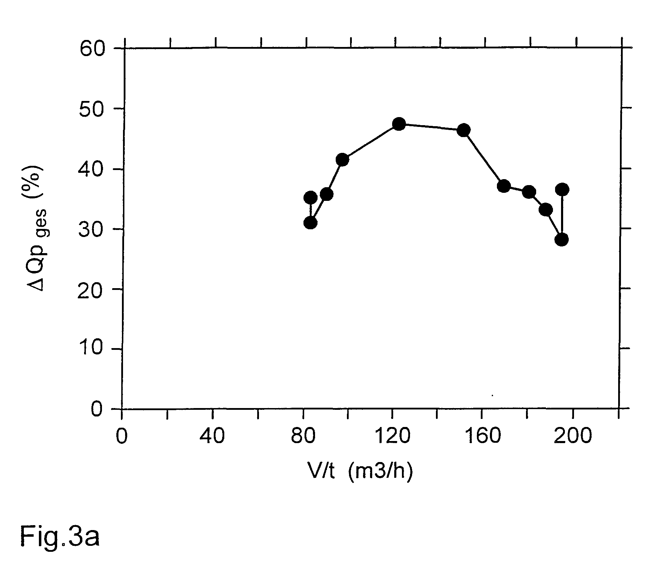

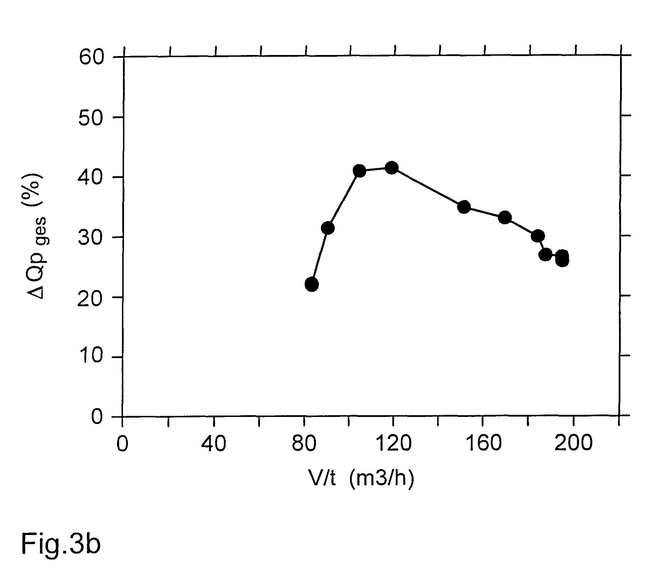

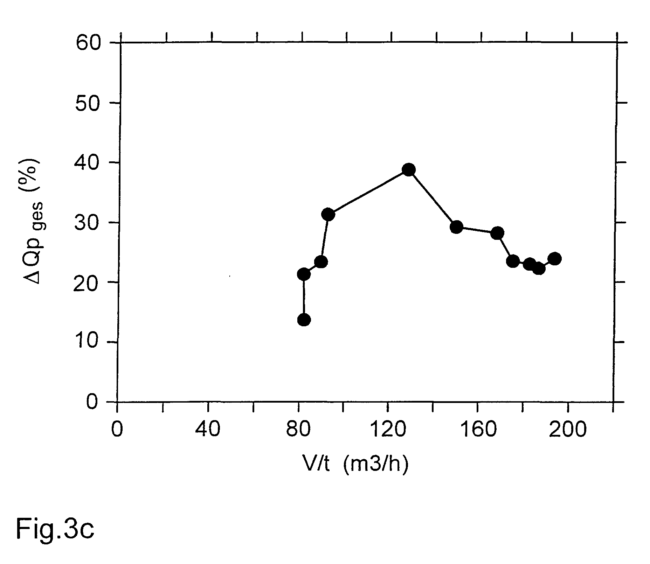

Die Figuren 3a bis 3c sind grafische Darstellungen der prozentualen Verringerung des Druckabfalls bei den Ausführungsformen anch Figur 1a bis 1c, mithin zur erreichten qualitativen Verbesserung der Strömungseigenschaften gegenüber einem viertelkreisförmigen Verbindungsstück. setzter gerader Rohrabschnitte, die einen dem Versatz gleichen Abstand der Enden von 2r haben, Figur 4d einen 180°-Umlenkkrümmer zur Verbindung zweier einen Versatz 2r aufweisender, zueinander paralleler Rohre, Figur 4e eine Anordnung aus einem 90°-Links- und einem 90°-Rechts-Krümmer mit einem dazwischen eingefügten geraden Rohrstück zur Verbindung zweier Rohre, die einen größeren Versatz als Abstand zueinander haben, und Figur 4f die Kombination eines 45°-Krümmers mit einem 20°-Krümmer gleicher Krümmungsrichtung zur Verbindung zweier einen Winkel von 75° miteinander einschließenden Rohrabschnitte. Fig. 4g zeigt eine Rohrverzweigung, bei der aus einander entgegengesetzten Richtungen anströmende Fluidströme über zwei gleiche, verlaufsoptimierte 90°-Verbindungsstücken in ein stärkeres Rohr geführt werden, während Fig. 4h eine Verzweigung zeigt, mit der ein Fluidstrom aus einem stärkeren Rohr über zwei gleiche, verlaufsoptmierte 45°-Verbindungsstücken in zwei unter einem Winkel von 90° abströmende Teilströme aufgeteilt wird.

Die im Ergebnis der jeweils für den konkreten Fall vorgenommenen Optimierung sich ergebende Abweichung vom kreissegmentförmigen Verlauf ist in den Skizzen gut zu erkennen; der jeweilige schematisch skizzierte Krümmungsverlauf ist jedoch nicht als universell optimierte Gesamtform zu verstehen. In der Praxis wird die Optimierung einer komplizierteren Rohrführung anhand eines in nullter Näherung aus einzelnen Verbindungsstück-Abschnitten vorgegebenen GesamtKrümmungsverlaufes bevorzugt zusammenhängend erfolgen.

In Figur 5 ist in schematischer Darstellung eine Vorrichtung zur Durchführung der Formbestimmung eines erfindungsgemäßen Verbindungsstücks anhand eines Modells IM in der Draufsicht gezeigt. Das flexible Verbindungsstück-Modell 1M mit kreisförmigem Querschnitt verbindet einen einlaufseitigen geraden Rohrabschnitt 2 gleichen Querschnitts mit einem zu diesm senkrecht stehenden auslaufseitigen geraden Rohrabschnitt 3 mit ebenfalls gleichem Querschnitt. Das Einlaufrohr 2 ist mit einem Lüfter 4 verbunden. Bei der gezeigten Ausführung ist das Modell 1M an seinen den Rohren 2 und 3 zugewandten Stirnflächen mit den Rohren 2 und 3 fest verbunden und zwischen diesen in Winkelabständen von jeweils 15° durch Haltevorrichtungen 5 gehaltert, die jeweils einen das Modell-Rohr 1M umgreifenden Haltering 5a, einen mit diesem Ring fest verbundenen Haltestab 5b und einen kulissensteinartigen Träger 5c für den Haltestab umfassen. Die Träger 5c sind in einer kreissegmentförmigen Führungsnut 6 einer Grundplatte 7 tangential verschieblich aufgenommen und nehmen selbst die Haltestäbe 5b radial verschieblich auf.

Über eine tangentiale Verschiebung und/oder eine Verstellung der Haltestäbe 5b in radialer Richtung in den Trägern 5c sowie ggfs. zusätzlich eine Drehung der Halter um eine vertikale Achse in den Trägern wird eine Verformung der Gestalt des flexiblen Verbindungsstück-Modells 1M bewirkt, so daß durch ein bestimmtes Ensemble von Einstellgrößen der Halter 5 eine bestimmte Gestalt des Modells 1M vorgegeben ist.

Ein- und auslaufseitig ist je eine Strömungssonde (Pitotoder Prandtlrohr) P1 bzw. P2 zur Erfassung des ein- und auslaufseitigen Drucks des Luftstromes vorgesehen. Die Drucksonden P1, P2 sind über je eine Signalaufbereitungsstufe 8.1 und 8.2 mit Meßeingängen einer Verarbeitungseinheit 9 verbunden, in der die Druckdifferenz p als Maß für den Strömungswiderstand des Verbindungsstück-Modells 1M in seiner jeweiligen Konfiguration bestimmt wird.

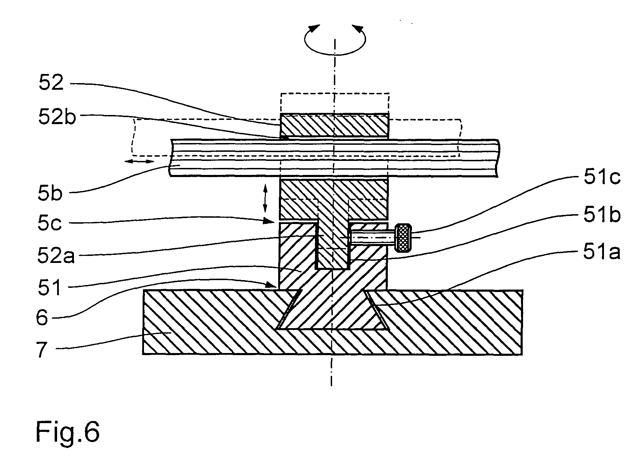

Die Halter 5 sind mit einer Verstelleinrichtung 10 verbunden, die eine separate Verstellung jedes Halters in seinen Freiheitsgraden (vgl. auch Figur 6) ermöglicht, wobei die Einstellwerte (im Rahmen von Wertebereichsvorgaben) durch einen Zufallsgenerator 11 erzeugt werden. Die praktische Realisierung kann beispielweise mit jeweils mehreren Schrittmotoren an den Trägern 5c oder - bei Vorsehen geeigneter Einstellskalen und Feststeller an den Trägern - auch manuell erfolgen. Im Sinne der weiter oben erwähnten Variationen des Her- stellungsverfahrens, bei denen eine lokale Verdichtung der Stützstellen in kritischen Winkelbereichen angewandt wer- den kann, wird bei der beschriebenen Vorrichtung entweder die Zahl der Halter 5 (bevorzugt im Rahmen einer maximalen Gesamtzahl) wählbar gehalten und eine Verdichtung der Anordnung von Haltern in für die Optimierung kritischen Winkelbereichen des Krümmungsverlaufes zugelassen, oder die Zahl der Halter bleibt konstant, und die angesprochene Verdichtung geht zu Lasten der Dichte der Halter in unkri- tischeren Winkelbereichen. Beide Varianten sind auch kom- binierbar, wobei die durchgehende Führungsnut 6, in der die Halter in frei wählbaren Winkelstellungen einsetzbar sind, eine vorteilhafte Ausführung gewährleistet.

Figur 6 zeigt in einer Querschnitts-Detaildarstellung des in Fig. 5 mit D bezeichneten Bereiches der Vorrichtung den Aufbau der in der Führungsnut 6 der Grundplatte 7 gelagerten Träger 5c (ohne Aktuatoren zur Verstellung). Ein Unterteil 51 des Trägers 5c weist der Schwalbenschwanzform der Führungsnut 6 angepaßte seitliche Ausnehmungen 51a sowie in seiner zur Oberfläche der Platte 7 parallelen Oberseite eine Sackbohrung 51b auf, die als Lager für einen aus der Unterseite eines Träger-Oberteils 52 hervorstehen- den zylindrischen Zapfen 52a dient. Das Träger-Oberteil 52 ist in der Sackbohrung 51b über eine Feststellschraube 51c höhenverstell- und fixierbar, wodurch - in durch die Höhe des Zapfens 52a begrenztem Maße - ein dreidimensionaler Verlauf des Rohrabschnitts 2 (Fig. 5) einstellbar ist. Über diesen ist das Oberteil 52 im Unterteil 51c drehbar gelagert. In einer durchgehenden waagerechten Bohrung 52b des Oberteils 52 ist der Haltestab 5b gleitbar aufgenommen. Mit den gestrichelten Linien ist eine zweite Position von Träger-Oberteil 52 und Haltestab 5b skizziert.

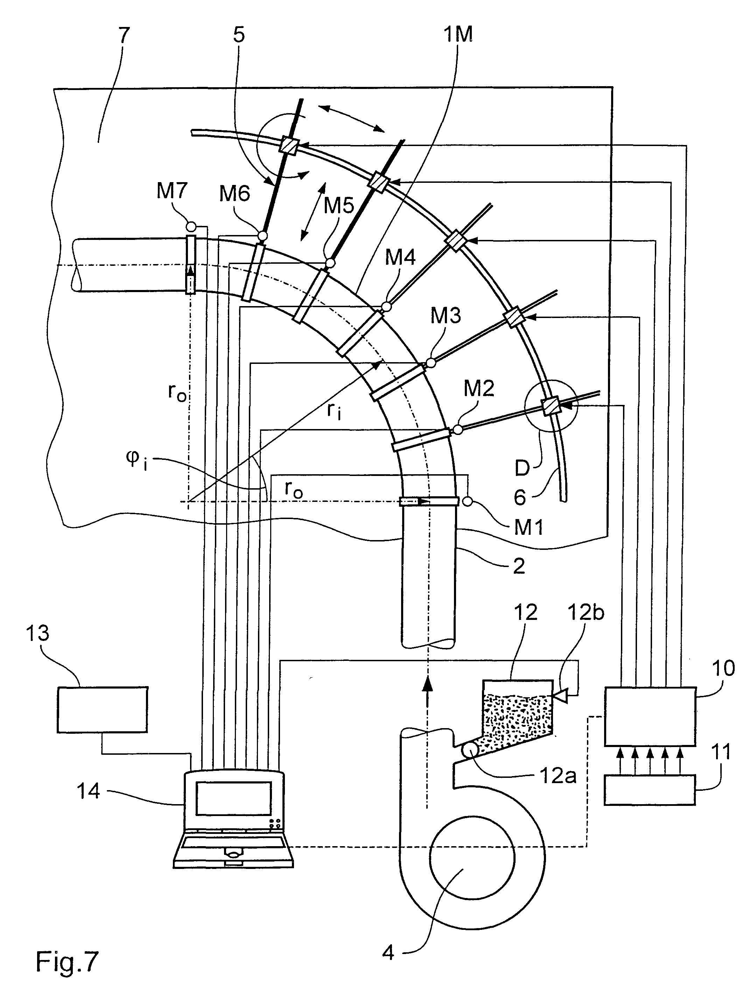

Figur 7 zeigt in schematischer Darstellung eine gegenüber Figur 5 modifizierte Vorrichtung zur Durchführung der Formbestimmung eines Verbindungsstücks. Gleiche Elemente wie bei der Anordnung nach Figur 5 sind mit gleichen Bezugsziffern bezeichnet und werden nicht nochmals erläutert.

Dem Lüfter 4 ist bei dieser Ausführungsform ein Feststoffbehälter 12 mit einem Ventil 12a und einer Füllstandsanzeige 12b zugeordnet, aus dem Feststoffteilchen in den vom Lüfter erzeugten Luftstrom angesaugt werden können. Ein Zeitgeber 13 ermöglicht die Bestimmung der Feststoffdurchsatzes pro Zeiteinheit, so daß über das Ventil 12a auch dessen Einstellung auf einen vorbestimmten Wert möglich ist.

Den vier Haltern 5 sowie dem Einlauf- und dem Auslaufquerschnitt des Modell-Krümmers 1M ist hier je ein Schwingungsaufnehmer (vorzugsweise Piezoaufnehmer) M1 bis M7 zugeordnet; die Schwingungsaufnehmer sind mit Eingängen einer mehrkanaligen Auswertungseinheit (Spektrenanalysator) 14 verbunden, die eine Spektralanalyse des Schwingungsverhaltens an jedem der Meßpunkte und somit eine Analyse der mechanischen Belastung des Verbindungsstücks im feststoffbeladenen Fluidstrom ermöglicht. Damit ist eine Optimierung des Verbindungssstücks im Hinblick auf minimale mechanische Beanspruchung und maximale Standzeit möglich selbstverständlich (bei leerem Behälter 12 oder geschlossenem Ventil 12a) auch für Fluidströme ohne Feststoffbeladung.

Figur 8 zeigt in schematischer Darstellung eine weitere gegenüber Figur 5 modifizierte, besonders einfach aufgebaute Vorrichtung zur Durchführung der Formbestimmung eines -beim dargestellten Beispiel zweiteiligen Verbindungsstücks. Gleiche Elemente wie bei Figur 5 oder Figur 7 sind wiederum mit gleichen Bezugsziffern bezeichnet.

Das Verbindungsstück-Modell 1M' besteht aus dem Teilmodell 1M'/a eines 45°-Krümmers und dem Teilmodell 1M'/b eines 30°-Krümmers, die derart aneinandergeflanscht und räumlich angeordnet sind, daß das Einlaufrohr 2 senkrecht verläuft und von oben in das Verbindungsstück-Modell 1M' mündet. Ein Auslaufrohr ist in dieser Ausführung nicht vorgesehen. In das Einlaufrohr mündet der mit einem Schieber 12a' verschließbare Entleerungsstutzen eines Feststoffbehälters 12', dem - wie bei der Ausführung nach Figur 6 - eine Füllstandsanzeige 12b' und ein Zeitgeber 13 zur Bestimmung des Volumendurchsatzes pro Zeiteinheit zugeordnet sind. Die aus dem Verbindungsstück-Modell ausströmenden Feststoffe gelangen in einen Sammelbehälter 15.

Der Antrieb des als Pseudofluid zu betrachtenden Feststoffstromes aus dem Behälter 12' durch das Verbindungsstück-Modell 1M' erfolgt hier allein durch die Schwerkraft und die Beurteilung der Krümmergestalt in erster Näherung anhand des Volumendurchsatzes pro Zeiteinheit.

Die Anordnung eignet sich besonders zur Bestimmung der Krümmergestalt für Schüttgut-Transportsysteme; anstelle von Feststoffen können in einem (ggfs. modizierten) Behälter aber auch Flüssigkeiten oder Flüssigkeit-Feststoff-Gemische untergebracht sein und zur Krümmer-Optimierung genutzt werden. Die Vorrichtung kann - ggfs. mit entsprechender Modifizierung der räumlichen Anordnung - natürlich auch mit anderen Krümmer-Modellen eingesetzt werden, etwa den in Figur 4a bis 4c, 4e und 4f gezeigten Beispielen.

## Patentansprüche

1. Gekrümmtes, insbesondere starres, Verbindungsstück (1A; 1B; 1C) mit über seine Länge im wesentlichen konstantem Querschnitt zum Verbinden eines ersten und eines zweiten, sich mindestens in dem an das Verbindungsstück angrenzenden Bereich im wesentlichen geradlinig erstrekkenden, starren Rohres (2, 3) oder Kanals zum Führen eines im wesentlichen stationären Fluidstromes mit vorbestimmter Richtung (F), wobei die Längsachsen (A2, A3) der angrenzenden Bereiche des ersten und des zweiten Rohres oder Kanals (2, 3) in einer gemeinsamen Ebene liegen oder auf eine gemeinsame Ebene projizierbar sind und sich die Längsachsen oder deren Projektionen auf die Ebene in der Umgebung des Verbindungsstücks in einem Punkt (S) schneiden und die dem Verbindungsstück benachbarten Enden (20, 30) des ersten und des zweiten Rohres oder Kanals vom Schnittpunkt (S) gleichen Abstand haben,
**dadurch gekennzeichnet,**
daß das Verbindungsstück eine Krümmung aufweist, die zwischen den ihm benachbarten Enden des ersten und des zweiten Rohres oder Kanals durch eine stetige Funktion K(x,y,z) beschrieben ist, die mindestens ein Maximum an einem Punkt oder in einem Abschnitt (Kₘₐₓ) hat, dessen Abstand zum Ende des ersten Rohres vom Abstand zum Ende des zweiten Rohres verschieden ist.

2. Verbindungsstück nach Anspruch 1, **dadurch gekennzeichnet,** daß die die Krümmung beschreibende Funktion einen Bereich stetigen Übergangs von einer Krümmung gleich oder nahe Null am Ende des anströmseitigen Rohres (2) bis zum Punkt oder Abschnitt (Kₘₐₓ) des Maximums und/oder von diesem bis zu einer Krümmung gleich oder nahe Null am Ende des abströmseitigen Rohres (3) aufweist.

3. Verbindungsstück nach einem der vorangehenden Ansprüche, **dadurch gekennzeichnet,** daß der Krümmungsverlauf im Bereich zwischen dem dem anströmseitigen Rohr (2) oder Kanal benachbarten Ende und dem Punkt oder Abschnitt (Kₘₐₓ) des Maximums einen Wendepunkt aufweist und/oder daß der Krümmungsverlauf im Bereich zwischen dem Punkt oder Abschnitt (Kₘₐₓ) des Maximums und dem dem abströmseitigen Rohr (3) oder Kanal benachbarten Ende einen Wendepunkt aufweist.

4. Verbindungsstück nach einem der vorangehenden Ansprüche, **dadurch gekennzeichnet,** daß der Querschnitt elliptisch, insbesondere kreisförmig, oder rechteckig ist.

5. Anordnung mit mindestens zwei in Richtung ihrer Längserstreckung aneinandergefügten Verbindungsstücken nach einem der vorangehenden Ansprüche, **dadurch gekennzeichnet,** daß mindestens zwei der aneinandergefügten Verbindungsstükke entgegengesetzte Krümmungsrichtungen aufweisen und/oder daß zwischen ihrer anströmseitigen und ihrer abströmseitigen Stirnfläche unterschiedliche Winkel einschließen, wobei insbesondere zwischen mindestens zwei Verbindungsstücken ein gerades Rohr- oder Kanalstück eingefügt ist.

6. Verbindungsstück oder Anordnung nach einem der vorangehenden Ansprüche, **gekennzeichnet durch** die Ausgestaltung als zwei- oder dreidimendionaler, in ein Rohrleitungs- oder Kanalsystem integrierter Verbindungsabschnitt.

7. Verfahren zur Herstellung eines Verbindungsstücks nach einem der vorangehenden Ansprüche, **dadurch gekennzeichnet,** daß ein Schritt der Formbestimmung des Verbindungsstücks einen Optimierungsvorgang unter Erzeugung eines reellen oder virtuellen Fluidstromes mit mindestens einem die Strömung oder deren Wirkung auf das Verbindungsstück kennzeichnenden meßbaren oder anhand der geometrischen Gestalt des Verbindungsstücks errechenbaren Parameter aufweist, dessen Wert ein Maß für die Optimierungsgröße, insbesondere den Strömungswiderstand oder die mechanische Belastung, einer vorgegebenen Verbindungsstück-Form gemäß Anspruch 1 ist, wobei die Form des Verbindungsstück-Modells (IM, 1M') mindestens durch die vorgegebenen Polarkoordinaten (rᵢ, φ1ᵢ) von ausgewählten Punkten seiner Mittenachse (A) bezüglich eines als Schnittlinie der ihm zugewandten Stirnflächen des ersten oder zweiten Rohres bestimmten Koordinatenursprungs (0) bestimmt wird.

8. Verfahren nach Anspruch 7, **dadurch gekennzeichnet,** daß die Menge der untersuchten Verbindungsstück-Modelle (IM; 1M') im Verlauf des Optimierungsvorganges, von mindestens einer vorgegebenen Form ausgehend, schrittweise vergrößert wird, bis eine Form mit hinreichender Annäherung an das Optimierungsziel, insbesondere mit hinreichend niedrigem Strömungswiderstand oder niedriger mechanischer Belastung des Verbindungsstücks, gefunden ist.

9. Verfahren nach Anspruch 7 oder 8, **dadurch gekennzeichnet,** daß die Form des Verbindungsstück-Modells (1M, 1M') durch die vorgegebenen Polarkoordinaten (ri, ý1i) von ausgewählten Punkten seiner Mittenachse (A) bezüglich eines als Schnittlinie der ihm zugewandten Stirnflächen des ersten oder zweiten Rohres bestimmten Koordinatenursprungs (0) bestimmt wird, wobei insbesondere ein Veränderungsschritt die Variation mindestens des Radius-Wertes (ri) eines Punktes der Mittenachse nach dem Zufallsprinzip umfaßt.

10. Verfahren nach Anspruch 9, **dadurch gekennzeichnet,** daß die Anzahl und/oder lokale Dichte der ausgewählten Punkte der Mittenachse im Verlauf des Optimierungsvorgangs variiert wird.

11. Verfahren nach Anspruch 9 oder 10, **dadurch gekennzeichnet,** daß der Krümmungsverlauf in einem Abschnitt durch Einstellung eines Wertepaares aus dem Radius-Wert an einem Punktes in dem Abschnitt und einer Richtungsgröße (φ₂ᵢ) für den Verlauf der Mittenachse in der Umgebung dieses Punktes eingestellt wird.

12. Verfahren nach einem der Ansprüche 7 bis 11, **dadurch gekennzeichnet,** daß eine Urform, insbesondere eine Guß-, Spritzguß- oder Biegeform, entsprechend der im Formbestimmungsschritt erhaltenen optimalen geometrischen Gestalt gefertigt und ein Formgebungsschritt für das Verbindungsstück mit dieser Urform ausgeführt wird.

13. Verfahren nach einem der Ansprüche 7 bis 12, **dadurch gekennzeichnet,** daß im Ergebnis des Schrittes der Formbestimmung eine Biegeform bzw. Schablone hergestellt wird, die zur Festlegung des Krümmungsverlaufs eines Verbindungsstücks oder eines Verbindungsabschnitts in einer zusammenhängenden Rohr- oder Kanalführung eingesetzt wird.

14. Vorrichtung zur Durchführung des Verfahrens nach einem der Ansprüche 7 bis 13, mit
- einer realen oder virtuellen Fluidquelle (4; 12; 12') zur Erzeugung eines realen oder virtuellen Fluidstromes mit mindestens einem vorbestimmten Strömungsparameter,
- einem realen oder virtuellen Verbindungsstück-Modell gemäß Anspruch 1 (1M, 1M') mit einem mindestens mittelbar mit dem Ausgang der Fluid-Quelle verbundenen Eingang, einem Ausgang und variablem Krümmungsverlauf in Richtung der Längserstrekkung zwischen seinem Ein- und Ausgang,
- einer Bestimmungseinrichtung (P1, P2, 8.1, 8.2; M1 bis M7; 12b; 12b', 13) zur Bestimmung von Werten einer Größe des Fluidstromes und/oder der mechanischen Belastung des Verbindungsstück-Modells,
- einer eingangsseitig mit dem Ausgang der Bestimmungseinrichtung verbundenen Verarbeitungseinheit (9; 14) zur Verarbeitung der Werte der bestimmten Größe und
- einer dem Verbindungsstück-Modell zugeordneten realen oder virtuellen Verstelleinrichtung (5, 6, 10, 11) zur Einstellung verschiedener vorbestimmter Krümmungsverläufe, welche aufweist:
-- eine Mehrzahl von Radial-Verstelleinrichtungen (5b, 5c) zur Verstellung des lokalen Radius eines Abschnitts des Verbindungsstück-Modells,
-- eine Mehrzahl von, jeweils einer Radial-Verstelleinrichtung zugeordneten, Tangential-Verstelleinrichtungen (5c, 6) zur Verschiebung des Angriffspunktes der jeweils zugeordneten Radial-Verstelleinrichtung am Verbindungsstück-Modell und
-- eine Mehrzahl von, jeweils einer Tangential-Verstelleinrichtung zugeordneten, Drehwinkel-Verstelleinrichtungen (51, 52) zur Drehung der Angriffsrichtung der jeweils zugeordneten Radial-Verstelleinrichtung,
insbesondere mit Mitteln zur Computersimulation der Fluidquelle, des Verbindungsstück-Modells und der Verstelleinrichtung sowie zur eingangsseitig des Verbindungsstücks vorgenommenen Bestimmung des Fluidparameters als Wertevorgabe und zur am Verbindungsstück-Modell oder ausgangsseitig von diesem vorgenommenen Bestimmung als Berechnung aufgrund der Simulationsparameter der Verstelleinrichtung.

15. Vorrichtung nach Anspruch 14, dadurch gekennzeichnet, daß das Verbindungsstück-Modell (1M) aus flexiblem Material besteht und als Radial-Verstelleinrichtungen am Umfang des Verbindungsstück-Modells angreifende, mit einem in dessen Längserrichtung verschieblichen, radial verlaufenden Haltestab (5b) versehene Halterungen (5a), als Tangential-Verstelleinrichtung eine viertelkreisförmig tangential verlaufende Führungsbahn (6) mit feststellbaren Trägern (5c) für die Haltestäbe der Radial-Verstelleinrichtungen und als Drehwinkel-Verstelleinrichtungen ein gegeneinander verdrehbares Ober- und Unterteil (52, 51) des Trägers vorgesehen sind.

16. Vorrichtung nach Anspruch 14 oder 15, **dadurch gekennzeichnet,** daß die Fluidquelle ein Drucklufterzeuger ist, der insbesondere ein Lüftergebläse (4) oder einen Kompressor aufweist und/oder daß die Fluidquelle ein Feststoffreservoir (12) zur Erzeugung eines Fluidstromes mit Feststoffteilchen einer vorgegebenen Größenverteilung und Konzentration aufweist.

17. Vorrichtung nach einem der Ansprüche 14 bis 16, **dadurch gekennzeichnet,** daß die Bestimmungseinrichtung einen Aufnehmer (P1, P2) zur Messung des Fluiddruckes und/oder einen Aufnehmer (Ml bis M5) zur Messung einer mechanischen Größe an der Wandung des Verbindungsstück-Modells (1M) und/oder daß die Bestimmungseinrichtung eine Fluidmengen-Erfassungs- und eine Zeitmeßeinrichtung (MV, MT) zur Ermittlung der das Verbindungsstück-Modell (1M) pro Zeiteinheit durchströmenden Fluidmenge aufweist.

18. Vorrichtung nach einem der Ansprüche 15 bis 17, **dadurch gekennzeichnet,** daß die Verstelleinrichtung einen Satz von Radial-Verstelleinrichtungen (5b, 5c) aufweist, aus dem die Mehrzahl der Verstelleinrichtungen variabel ausgewählt werden kann, und/oder daß Mittel zu einer freien Vorgabe der Winkelstellungen der Radial-Verstelleinrichtungen am Verbindungsstück-Modell vorgesehen sind.

## Claims

1. A curved, in particular rigid connecting element (1A; 1B; 1C) of a cross-section which is substantially constant over its length, for connecting first and second rigid pipes (2, 3) or conduits extending substantially rectilinearly at least in the region adjoining the connecting element, for carrying a substantially steady fluid flow with a predetermined direction (F), wherein the longitudinal axes (A2, A3) of the adjoining regions of the first and second pipes or conduits (2, 3) are disposed in a common plane or can be projected on to a common plane and the longitudinal axes or the projections thereof on to the plane intersect in the space around the connecting element at a point (S) and the ends (20, 30), which are adjacent to the connecting element, of the first and second pipes or conduits are at the same spacing from the intersection point (S), characterised in that the connecting element is of a curvature which is described between the ends adjacent thereto of the first and second pipes or conduits by a continuous function K (x,y,z) which has at least one maximum at a point or in a portion (Kₘₐₓ) whose spacing relative to the end of the first pipe is different from the spacing relative to the end of the second pipe.

2. A connecting element according to claim 1 characterised in that the function describing the curvature has a region of a steady transition from a curvature equal to or close to zero at the end of the upstream pipe (2) to the point or portion (Kₘₐₓ) of the maximum and/or from same to a curvature equal to or close to zero at the end of the downstream pipe (3).

3. A connecting element according to one of the preceding claims characterised in that the curvature configuration has a point of inflexion in the region between the end adjacent to the upstream pipe (2) or conduit and the point or portion (Kₘₐₓ) of the maximum and/or that the curvature configuration has a point of inflexion in the region between the point or portion (Kₘₐₓ) of the maximum and the end adjacent to the downstream pipe (3) or conduit.

4. A connecting element according to one of the preceding claims characterised in that the cross-section is elliptical, in particular circular, or rectangular.

5. An arrangement comprising at least two connecting elements according to one of the preceding claims, which are fitted together in the direction of their longitudinal extent, characterised in that at least two of the connecting elements which are fitted together have opposite directions of curvature and/or that they include different angles between their upstream and their downstream end faces, wherein in particular a straight pipe or conduit portion is inserted between at least two connecting elements.

6. A connecting element or arrangement according to one of the preceding claims characterised by a configuration in the form of a two-dimensional or three-dimensional connecting portion which is integrated into a pipe or conduit system.

7. A method of manufacturing a connecting element according to one of the preceding claims characterised in that a step of determining the form of the connecting element has an optimisation procedure involving the production of a real or virtual fluid flow with at least one parameter which characterises the flow or the effect thereof on the connecting element and which can be measured or which can be calculated on the basis of the geometrical configuration of the connecting element and the value of which is a measurement in respect of the optimisation magnitude, in particular the flow resistance or the mechanical loading, of a predetermined connecting element form, in accordance with claim 1, wherein the form of the connecting element model (1M, 1M') is determined at least by the predetermined polar co-ordinates (rᵢ, Ø1ᵢ) of selected points of its centre line (A) with respect to a co-ordinate origin (0) which is determined as the section line of the end faces, which face towards it, of the first or second pipe.

8. A method according to claim 7 characterised in that the amount of the connecting element models (1M; 1M') being investigated is increased stepwise in the course of the optimisation procedure, starting from at least one predetermined form, until a form with an adequate approximation to the optimisation target, in particular with a sufficiently low flow resistance or low mechanical loading of the connecting element, is found.

9. A method according to claim 7 or claim 8 characterised in that the form of the connecting element model (1M, 1M') is determined by the predetermined polar co-ordinates (ri, ýli ) of selected points of its centre line (A) with respect to a co-ordinate origin (0) which is determined as the section line of the end faces, which face towards it, of the first or second pipe, wherein in particular a variation step includes the variation at least in the radius value (ri) of a point on the centre line in accordance with the random principle.

10. A method according to claim 9 characterised in that the number and/or local density of the selected points on the centre line is varied in the course of the optimisation procedure.

11. A method according to claim 9 or claim 10 characterised in that the curvature configuration is set in a portion by adjustment of a pair of values comprising the radius value at a point in the portion and a directional value (Ø₂ᵢ) for the configuration of the centre line in the area around said point.

12. A method according to one of claims 7 to 11 characterised in that a master pattern, in particular a casting, injection moulding or bending mould, corresponding to the optimum geometrical configuration achieved in the form-determining step is produced and a form-imparting step is implemented for the connecting element with that master pattern.

13. A method according to one of claims 7 to 12 characterised in that as the result of the form-determining step a bending mould or template is produced which is used for establishing the curvature configuration of a connecting element or a connecting portion in an interconnected pipe or conduit system.

14. Apparatus for carrying out the method according to one of claims 7 to 13 comprising
- a real or virtual fluid source (4; 12; 12') for producing a real or virtual fluid flow with at least one predetermined flow parameter,
- a real or virtual connecting element model (1M, 1M') according to claim 1 with an inlet which is at least indirectly connected to the outlet of the fluid source, an outlet and a variable curvature configuration in the direction of the longitudinal extent between its inlet and its outlet,
- a determining means (P1, P2, 8.1, 8.2; M1 to M7; 12b; 12b', 13) for determining values of a magnitude of the fluid flow and/or the mechanical loading of the connecting element model,
- a processing unit (9; 14) connected at the input side to the output of the determining means for processing the values of the determined magnitude, and
- a real or virtual adjusting means (5, 6, 10, 11) associated with the connecting element model, for setting various predetermined curvature configurations, which has:
- - a plurality of radial adjusting means (5b, 5c) for adjusting the local radius of a portion of the connecting element model,
- - a plurality of tangential adjusting means (5c, 6) respectively associated with a radial adjusting means for displacement of the point of engagement of the respectively associated radial adjusting means on the connecting element model, and
- - a plurality of rotary angle adjusting means (51, 52) respectively associated with a tangential adjusting means for rotating the direction of engagement of the respectively associated radial adjusting means,
in particular with means for computer simulation of the fluid source, the connecting element model and the adjusting means and for determination, implemented at the inlet side of the connecting element, of the fluid parameter as a value presetting and for determination, implemented at the connecting element model or at the outlet side thereof as a calculation on the basis of the simulation parameters of the adjusting means.

15. Apparatus according to claim 14 characterised in that the connecting element model (1M) comprises flexible material and the radial adjusting means are holders (5a) which engage the periphery of the connecting element model and which are provided with a radially extending holding bar (5b) which is displaceable in the longitudinal direction of the model, the tangential adjusting means is a guide path (6) extending tangentially in a quadrant shape with fixable carriers (5c) for the holding bars of the radial adjusting means, and the rotary angle adjusting means are an upper and a lower portion (52, 51) of the carrier, the upper and lower portions being rotatable relative to each other.

16. Apparatus according to claim 14 or claim 15 characterised in that the fluid source is a compressed air generator which in particular has a blower fan (4) or a compressor and/or that the fluid source has a solids reservoir (12) for producing a fluid flow with solids particles of a predetermined grain distribution and concentration.

17. Apparatus according to one of claims 14 to 16 characterised in that the determining means has a pick-up (P1, P2) for measuring the fluid pressure and/or a pick-up (M1 to M5) for measuring a mechanical value at the wall of the connecting element model (1M) and/or that the determining means has a fluid quantity detection and a time measuring means (MV, MT) for ascertaining the amount of fluid flowing through the connecting element model (1M) per unit of time.

18. Apparatus according to one of claims 15 to 17 characterised in that the adjusting means has a set of radial adjusting means (5b, 5c) from which the plurality of adjusting means can be variably selected and/or that there are provided means for freely presetting the angular positions of the radial adjusting means on the connecting element model.

## Revendications

1. Raccord courbe et en particulier rigide (1A; 1B; 1C), présentant une section pratiquement constante sur toute sa longueur, servant à raccorder entre eux un premier et un second tuyaux ou conduits (2, 3) rigides, les deux tuyaux ou conduits étant rectilignes au moins dans les zones adjacentes au raccord, leur rôle étant de permettre un écoulement de fluide essentiellement stationnaire ayant une direction prédéterminée (F), les axes longitudinaux (A2, A3) des zones adjacentes des premier et second tuyaux ou conduits (2, 3) étant situés dans le même plan ou pouvant être projetés sur un même plan, l'intersection des axes longitudinaux ou de leurs projections sur le plan étant située dans le voisinage du raccord, en un point (S), les extrémités des premier et second tuyaux ou conduits jouxtant le raccord (20, 30) étant équidistantes du point d'intersection (S),
**caractérisé en ce que**
la courbure du raccord entre les extrémités adjacentes du premier et du second tuyaux ou conduits est décrite par une fonction continue K(x, y, z), présentant au moins un maximum en un point ou dans une section (Kₘₐₓ), la distance séparant ledit maximum de l'extrémité du premier tuyau étant différente de la distance le séparant de l'extrémité du second tuyau.

2. Raccord selon la revendication 1, **caractérisé en ce que** la fonction décrivant la courbure présente une zone de transition continue entre une courbure nulle ou quasiment nulle à l'extrémité du tuyau par où arrive le fluide (2), jusqu'au point ou jusqu'à la section (Kₘₐₓ) du maximum, et/ou depuis ce dernier jusqu'à une courbure nulle ou quasiment nulle à l'extrémité du tuyau par où ressort le fluide (3).

3. Raccord selon l'une des revendications précédentes, **caractérisé en ce que** la courbure présente un point d'inflexion dans la zone située entre l'extrémité jouxtant le tuyau ou conduit par où arrive le fluide (2), et le point ou la section (Kₘₐₓ) du maximum, et/ou en ce que la courbure présente un point d'inflexion dans la zone située entre le point ou la section (Kₘₐₓ) du maximum et l'extrémité jouxtant le tuyau ou conduit par où ressort le fluide (3).

4. Raccord selon l'une des revendications précédentes, **caractérisé en ce que** la section est elliptique, en particulier circulaire, ou rectangulaire.

5. Dispositif comprenant au moins deux raccords selon l'une des revendications précédentes, rattachés l'un à l'autre dans le sens de la longueur, **caractérisé en ce que** au moins deux des raccords rattachés l'un à l'autre présentent des courbures en sens opposé et/ou comprennent des angles différents entre la face d'extrémité du côté d'arrivée du fluide et la face d'extrémité du côté de sortie du fluide, un tuyau ou conduit rectiligne étant inséré entre au moins deux raccords.

6. Raccord ou dispositif selon l'une des revendications précédentes, **caractérisé par le fait** d'être façonné de manière à former une section de raccord intégrée dans un système de tuyauteries ou de conduits.

7. Procédé de fabrication d'un raccord selon l'une des revendications précédentes, **caractérisé en ce qu**'un pas de la formation du raccord présente un procédé d'optimisation générant un écoulement de fluide réel ou virtuel, dont au moins un paramètre caractérisant l'écoulement ou son influence sur le raccord puisse être mesuré ou calculé sur la base de la forme géométrique du raccord, et dont la valeur est une mesure de la dimension d'optimisation, en particulier de la résistance opposée à l'écoulement, ou de la sollicitation mécanique, d'une forme déterminée du raccord selon la revendication 1, la forme du modèle de raccord (1M, 1M') étant déterminée au moins par les coordonnées polaires données (rᵢ, Φ1ᵢ) de points choisis sur son axe central (A) par rapport à une origine de coordonnées (0), elle-même déterminée par l'intersection des lignes de prolongement des projections des sections d'extrémités des premier et second tuyaux.

8. Procédé selon la revendication 7, **caractérisé en ce que,** partant d'au moins une forme donnée, l'ensemble des modèles de raccords étudiés (1M; 1M') est augmenté pas à pas au cours du procédé d'optimisation, jusqu'à ce qu'une forme ait été trouvée qui soit suffisamment proche de l'objectif d'optimisation, et présentant en particulier une résistance suffisamment faible à l'écoulement ou une faible sollicitation mécanique du raccord.

9. Procédé selon l'une des revendications 7 ou 8, **caractérisé en ce que** la forme du modèle de raccord (1M, 1M') est déterminée par les coordonnées polaires données (ri, ý1i) de points choisis sur son axe central (A), par rapport à une origine de coordonnées (0), elle-même déterminée par l'intersection des lignes de prolongement des projections des sections d'extrémités des premier et second tuyaux, un pas de modification comprenant en particulier la variation d'au moins la valeur du rayon (ri) d'un point de l'axe central selon le principe des événements aléatoires.

10. Procédé selon la revendication 9, **caractérisé en ce que** le nombre et/ou la densité locale des points choisis de l'axe central est varié au cours du procédé d'optimisation.

11. Procédé selon l'une des revendications 9 ou 10, **caractérisé en ce que** la forme de la courbure dans une section est obtenue par ajustement d'une paire de valeurs du rayon en un point de la section et d'une dimension directionnelle (Φ₂ᵢ) pour le cours de l'axe central aux alentours de ce point.

12. Procédé selon l'une des revendications 7 à 11, **caractérisé en ce** qu'un moule d'origine, en particulier un moule de fonte, un moule pour coulage par injection ou une forme de cintrage est façonné selon la forme géométrique optimale obtenue comme résultat du pas de détermination de la forme, et en ce qu'un pas de détermination de la forme du raccord est effectué en utilisant ce moule d'origine.

13. Procédé selon l'une des revendications 7 à 12, **caractérisé en ce que,** comme résultat du pas de détermination de la forme, une forme de cintrage ou un gabarit est façonné, qui est ensuite utilisé pour déterminer la courbure d'un raccord ou d'une section de raccord dans une tuyauterie ou canalisation continue.

14. Dispositif pour la réalisation du procédé selon l'une des revendications 7 à 13, comportant:
- une source de fluide réelle ou virtuelle (4; 12; 12') pour générer un écoulement de fluide réel ou virtuel avec au moins un paramètre d'écoulement donné d'avance,
- un modèle de raccord réel ou virtuel selon la revendication 1 (1M, 1M'), ayant une entrée raccordée au moins indirectement à la sortie de la source de fluide, une sortie, et dont la courbure varie sur l'extension en longueur entre l'entrée et la sortie,
- un dispositif de détermination (P1, P2, 8.1, 8.2; M1 à M7; 12b; 12b', 13) servant à déterminer les valeurs d'une dimension du courant de fluide et/ou de la sollicitation mécanique du modèle de raccord,
- une unité d'élaboration (9; 14) raccordée du côté entrée à la sortie du dispositif de détermination, servant à élaborer les valeurs de la dimension déterminée et,
- un dispositif d'ajustement réel ou virtuel (5, 6, 10, 11) affecté au modèle de raccord, servant à ajuster diverses courbures données d'avance et comprenant:
-- un nombre de systèmes d'ajustement radiaux (5b, 5c) permettant l'ajustement du rayon local d'une section du modèle de raccord,
-- un nombre de systèmes d'ajustement tangentiels (5c, 6) affectés chacun à un système d'ajustement radial, permettant de déplacer le point d'attaque du système d'ajustement radial auquel chaque système d'ajustement tangentiel est affecté sur le modèle de raccord,
-- un nombre de systèmes d'ajustement d'angle de rotation (51, 52) affectés chacun à un système d'ajustement tangentiel, permettant la rotation de la direction d'attaque du système d'ajustement radial correspondant,
et comportant en particulier des moyens de simulation de la source de fluide, du modèle de raccord et du système d'ajustement, gérés par ordinateur, ainsi que des moyens pour la détermination des paramètres de fluide à l'entrée du raccord pour servir de valeur donnée d'avance, et pour la détermination de valeurs sur le raccord ou à la sortie de ce dernier, au moyen de calculs basés sur les paramètres de simulation du système d'ajustement.

15. Dispositif selon la revendication 14, **caractérisé en ce que** le modèle de raccord (1 M) est en matériau flexible et est équipé de systèmes d'ajustement radiaux dont les points d'attaque sont situés sur le pourtour du modèle de raccord, présentant un support (5a) pourvu d'une tige de retenue (5b) pouvant être déplacée le long du modèle de raccord et s'étendant en direction radiale, d'un système d'ajustement tangentiel constitué d'un rail guide (6) ayant la forme d'un quart de cercle et s'étendant tangentiellement, équipé de supports pouvant être verrouillés (5c) pour les tiges de retenue des systèmes d'ajustement radiaux, et de systèmes d'ajustement des angles de rotation, comportant une partie supérieure et une partie inférieure (52, 51) du support et pouvant tourner l'un par rapport à l'autre.

16. Dispositif selon l'une des revendications 14 ou 15, **caractérisé en ce que** la source de fluide est un compresseur d'air muni en particulier d'un ventilateur (4) ou d'un compresseur et/ou en ce que la source de fluide est un réservoir contenant de la matière solide (12) permettant de générer un courant de fluide contenant des particules solides ayant une distribution de tailles et une concentration données d'avance.

17. Dispositif selon l'une des revendications 14 à 16, **caractérisé en ce que** le système de détermination présente des capteurs (P1, P2) permettant de mesurer la pression du fluide, et/ou des capteurs (M1 à M5) permettant de mesurer une dimension mécanique sur la paroi du modèle de raccord (1M), et/ou que le système de détermination est équipé d'un dispositif de mesure de la quantité de fluide et de mesure du temps (MV, MT) servant à déterminer la quantité de fluide passant à travers le modèle de raccord (1M) par unité de temps.

18. Dispositif selon l'une des revendications 15 à 17, **caractérisé en ce que** le système d'ajustement présente un jeu de systèmes d'ajustement radiaux (5b, 5c), parmi lesquels la plupart des systèmes d'ajustement peut être choisie de manière variable et/ou en ce que des moyens permettant de fixer librement les ajustements angulaires des systèmes d'ajustement radiaux sur le modèle de raccord aient été prévus.
